## Europäisches Patentamt
## European Patent Office
## Office européen des brevets

(11) Veröffentlichungsnummer: **0 012 864**
**B1**

(12) **EUROPÄISCHE PATENTSCHRIFT**

(45) Veröffentlichungstag der Patentschrift:
**14.12.83**

(21) Anmeldenummer: **79104737.6**

(22) Anmeldetag: **28.11.79**

(51) Int. Cl.³: **H 04 M 1/65**

(54) **Fernsprechapparat.**

(30) Priorität: **16.12.78 DE 2854516**
**16.12.78 DE 2854401**
**16.12.78 DE 2854431**
**05.09.79 DE 2935799**

(43) Veröffentlichungstag der Anmeldung:
**09.07.80 Patentblatt 80/14**

(45) Bekanntmachung des Hinweises auf die Patenterteilung:
**14.12.83 Patentblatt 83/50**

(84) Benannte Vertragsstaaten:
**AT BE CH FR GB IT LU NL SE**

(56) Entgegenhaltungen:
**DE - A - 2 623 729**
**DE - C - 837 256**
**FR - A - 2 288 430**
**FR - A - 2 360 216**
**GB - A - 1 525 437**
**US - A - 2 886 640**
**US - A - 3 914 551**

**COMPUTER, Band 6, Heft 10, Oktober 1973, Seite 39,**
**IEEE Northridge, California, U.S.A.**
**"Electronically-Synthesized Voice Produces With**
**Natural Qualities"**
**1977 ELECTRO CONFERENCE RECORD, 21.-24.April**

(73) Patentinhaber: **Deutsche Fernsprecher Gesellschaft mbH Marburg, Frauenbergstrasse 35, D-3550 Marburg (DE)**

(72) Erfinder: **Hannig, Hubert, Am Kornacker, D-3550 Marburg (DE)**
Erfinder: **Krapp, Karl Hermann, Auf dem Schaumrück, D-3551 Wehrda (DE)**
Erfinder: **Mölleken, Heinz, Aueweg 5, D-3578 Schwalmstadt (DE)**

(74) Vertreter: **Eisenführ & Speiser et al, Martinistrasse 24, D-2800 Bremen 1 (DE)**

(56) Entgegenhaltungen: (Fortsetzung)
**1977, Seiten 12/3.1 - 12/3.9 El Degundo Ca, U.S.A.**
**WILLIAMS: "Magnetic Bubble Memory in Telephone Systems"**
**NACHRICHTEN ELEKTRONIK, Band 33, Heft 5, Mai 1979, Seite 163 Heidelberg, DE. "Telefon der Zukunft"**

Fernsprechapparat

Die Erfindung betrifft einen Fernsprechapparat mit einem Gehäuse, das eine Wähleinrichtung und eine Stationsschaltung enthält, mit einem die Sprechkapsel und die Hörkapsel der Stationsschaltung tragenden Handapparat, mit einem integral im Gehäuse angeordneten Anrufbeantworter, der einen ersten Speicher zur Speicherung und Wiedergabe eines Ansagetextes an die Sprechadern des Teilnehmeranschlusses, und eine mit den Sprechadern verbundene Steuerschaltung zur Wahl und Steuerung des Betriebszustandes, sowie einen Aufnahmekanal und einen Wiedergabekanal enthält, die an den ersten Speicher zur Aufnahme und zur Wiedergabe eines Ansagetextes anschliessbar sind.

Ein derartiger Fernsprechapparat ist aus der DE-C-837 256 bekannt. Bei diesem bekannten Apparat besteht die Aufzeichnungsträger aus einer Schallplatte, auf die mehrere verschiedene Ansagetexte aufgezeichnet sind und mittels einer mechanischen Wähleinrichtung selektiv zur jeweiligen Ansage bei Erhalt eines Anrufes vorgebbar sind. Neben dem grossen Platzbedarf ist insbesondere das Fehlen jeglicher Massnahmen nachteilig, welche das gezielte Aufsprechen der standardisierten Ansagetexte innerhalb der von Post vorgegebenen Zeitabschnitte erleichtert.

Aus der Zeitschrift «Computer», Oktober 1973, S. 39 ist es ferner bekannt, einen Festkörperspeicher zur Informationsspeicherung in Anrufbeantwortern anstelle Magnetband- oder Plattenspeicher zu verwenden.

Aufgabe der Erfindung ist es, einen Fernsprechapparat der eingangs genannten Art derart weiterzubilden,dass ein raumsparender Aufbau und eine einfache und übersichtliche Bedienbarkeit insbesondere auch beim Aufsprechen der Ansagetexte möglich ist.

Dieser Aufbau wird erfindungsgemäss dadurch gelöst, dass der erste Speicher als Festkörper ausgebildet ist, vor dessen Eingang ein Analog/Digitalwandler zur Umwandlung der analogen Sprachsignale in digitale Sprachsignale, und an dessen Ausgang ein Digital/Analogwandler zur Rückwandlung der gespeicherten digitalen Sprachsignale in analoge Sprachsignale vorgesehen ist, und dass eine optische Anzeigevorrichtung aus mehreren örtlich in Reihe angeordneten Anzeigeelementen, deren Gesamtzahl proportional der möglichen Speicherkapazität ist, im Gehäuse sichtbar angeordnet ist, die bei der Aufnahme und/oder der Wiedergabe von Ansagetext-Abschnitten anspricht und den bei der Aufnahme und/oder Wiedergabe durchadressierten Teil des betreffenden Bereichs des ersten Speichers anzeigt.

Die Vorteile der Erfindung liegen insbesondere darin, dass der Fernsprechapparat zur Anrufbeantwortung aufgrund der Verwendung eines Festkörperspeichers keine beweglichen Teile wie Laufwerk,Bandkassette etc.und auch keine Kontrollschaltungen für die Überwachung von Bandriss oder Laufwerkblockade benötigt, wodurch der Raumbedarf zur Unterbringung der für die Anrufbeantworterfunktionen erforderliche Schaltung entscheidend verringert ist, so dass die Unterbringung auch in Fernsprechapparaten mit Seriengehäusen möglich ist. Ausserdem wird durch die optische Anzeigevorrichtung, welche beim Aufnehmen und/oder bei der Wiedergabe von Ansagetext-Abschnitten aktiviert wird und jeweils den schon durchadressierten Teil des Speichers relativ zur Gesamtkapazität des Speichers anzeigt, dem Benutzer zu jedem Zeitpunkt genau mitgeteilt, welcher Anteil der gesamten Speicherkapazität augenblicklich noch frei ist und vom Restabschnitt des Ansagetextes noch belegt werden kann. Da der Benutzer gemäss Vorschriften der Postbehörden den weitgehend vorgegebenen Ansagetext innerhalb eines vorgegebenen Zeitintervalls aufsprechen muss, ist die jeweilige Anzeige des noch verfügbaren Anteils an Speicherkapazität besonders wichtig, weil der Benutzer dadurch seine jeweilige Sprechgeschwindigkeit - zu jedem Zeitpunkt - entsprechend anpassen kann. Dadurch wird erreicht, dass der Ansagetext in einfacher Weise innerhalb des verfügbaren Zeitintervalls relativ gleichmässig aufgesprochen werden kann. Die Bedienbarkeit ist dadurch wesentlich vereinfacht.

Ausserdem sind eine Vielzahl von Anrufbeantwortern als Zusatzeinrichtung für Fernsprechapparate bekannt, entweder als Anrufbeantworter ohne Gesprächsaufzeichnung, als Anrufbeantworter mit Gesprächsaufzeichnung, und mit fester oder variabler Aufzeichnungszeit, oder als Anrufbeantworter mit Gesprächsaufzeichnung und Fernabfrage des Aufzeichnungstextes sowie mit Fernlöschung. Die Bedienung der bekannten Beistellgeräte ist unterschiedlich und erfordert in der Regel einen erheblichen Aufwand bei der Inbetriebnahme sowie beim Erlernen der Bedienungsweise. Nachteilig ist dabei neben dem relativ grossen Raumbedarf insbesondere die relativ komplizierte Bedienbarkeit, die zum Teil dadurch bedingt ist, dass die Aufgabe eines Ansagetextes bzw. die Gesprächsaufzeichnung in einem völlig getrennten Gerät erfolgt.

Um die zur digitalen Speicherung des Sprachsignals in einem Festkörperspeicher erforderliche Speicherkapazität gering zu halten, wird zur Analog/Digitalwandlung des Sprachsignals bevorzugt ein Deltamodulationssystem verwendet, bei dem anstelle der jeweiligen Gesamtgrössen der zu digitalisierenden Amplitudenwerte lediglich die Änderung des herausgetasteten Amplitudenwerts gegenüber dem vorausgegangenen herausgetasteten Amplitudenwert ausgewertet wird. Es hat sich gezeigt, dass bei diesem Verfahren mit einer Datenrate von unter 12 000 Bit/Sek. eine gute Sprachqualität erhalten und wiedergegeben werden kann. Der Digital/Analogwandler am Ausgang des ersten Speichers enthält dann einen Delta-Modulator, um die digitalen Sprachsignale entsprechend dem eingesetzten Modulationsverfahren zu demodulieren.

Die Steuerschaltung koppelt in einer ersten Einstellung den Ausgang des ersten Speichers an die Sprechadern an und gibt den Ansagetext bei Empfang eines Anrufs an die Sprechadern ab. In einer zweiten Einstellung, die sich vom Benutzer einstellen lässt, verbindet die Steuerschaltung den Eingang zum Aufsprechen des Ansagetextes mit dem Aufnahmekanal, und in einer wählbaren dritten Einstellung verbindet die Steuerschaltung den Ausgang des ersten Speichers zur Wiedergabe des Ansagetextes mit dem Wiedergabekanal. Vorgesehen ist ferner eine Ruhestellung, in der der Ausgang und der Eingang des ersten Speichers von der Schaltung des Fernsprechapparates abgetrennt sind.

Um die einwandfreie Funktion des Fernsprechbetriebs beim erfindungsgemässen Fernsprechapparat zu gewährleisten, darf die Abwicklung abgehender und ankommender Fernsprechverbindungen durch den ersten Speicher und die Steuerschaltung sowie eventuell weiterer Zusatzeinrichtungen nicht behindert werden. Zu diesem Zweck geht die Steuerschaltung im Ruhezustand, d.h. vor Empfang eines Anrufs, selbsttätig aus der zweiten oder dritten Stellung in die Ruhestellung über, aus der die Steuerschaltung bei Empfang eines Anrufes wieder in die erste Einstellung übergeht und dabei den ersten Speicher an die Sprechadern ankoppelt.

Die Postvorschriften schreiben bei Anrufbeantwortern ohne Gesprächsaufzeichnung einen zusammenhängenden Ansagetext vor, wahrend bei Anrufbeantwortern mit Gesprächsaufzeichnung zuerst ein Meldetext vorgeschriebener Art und Dauer, anschliessend ein freier zweiter Speicher zur Gesprächsaufzeichnung, und anschliesend ein Absagetext vorgeschriebener Art und Dauer an die Sprechadern anzukoppeln ist. Für den Fall, dass bei einem Anrufbeantworter mit Gesprächsaufzeichnung aus irgendeinem Grund der zweite Speicher nicht aufzeichnungsbereit ist, fordert die Post einen dritten Beantwortungstext vorgeschriebener Art und Dauer, der dann an die Sprechadern abzugeben ist.

Der im erfindungsgemässen Fernsprechapparat enthaltene Anrufbeantworter lässt sich wahlweise mit der Möglichkeit der Gesprächsaufzeichnung oder ohne Möglichkeit der Gesprächsaufzeichnung betreiben. Soll Gesprächsaufzeichnung möglich sein, so sind auf dem ersten Speicher der Meldetext, der Absagetext und der Beantwortungstext als getrennte Ansagetext-Abschnitte gespeichert. Bei Betrieb ohne Gesprächsaufzeichnung ist dagegen nur der zusammenhängende Ansagetext gespeichert.

Erfindungsgemäss ist der als Festkörperspeicher ausgebildete erste Speicher des Fernsprechapparats daher wahlweise entweder in mehrere Speicherbereiche unterteilbar, und zwar in einen Meldetext-Bereich, einen Absagetext-Bereich und einen Beantwortungstext-Bereich, oder der erste Speicher besteht wahlweise nur aus einem Ansagetext-Bereich.Es stellt ein wesentliches Merkmal der vorliegenden Erfindung dar, dass die einzelnen Speicherbereiche zur Aufzeichnung und Wiedergabe von Ansagetext-Abschnitten über den Aufnahmekanal und den Wiedergabekanal direkt - ohne irgendwelche Suchzeiten - adressierbar sind. Dies stellt gegenüber dem Stand der Technik mit Magnetbandspeichern einen wesentlichen Vorteil dar, da bei den verwendeten Magnetbandspeichern vor dem Einsprechen des Ansagetext-Abschnittes in einen bestimmten Speicherbereich des Magnetband vorab immer erst in die im Speicherbereich entsprechende Stellung - durch schnelles Vorwärts- oder Rückwärtsspulen - gebracht werden musste.

Die Speicherplätze der einzelnen Bereiche des ersten Speichers werden zur Aufnahme und Wiedergabe der Ansagetext- Abschnitte seriell und zeitsynchron von einem mit konstantem Zeittakt gespeisten Zähler adressiert. Die Steuerschaltung steuert den Betriebsablauf bevorzugt derart, dass jeder Aufnahme eines Ansagetext-Abschnitts in irgendeinen gewählten Bereich des ersten Speichers anschliessend unmittelbar ein Wiedergabevorgang über den Wiedergabekanal nachfolgt, so dass der Benutzer den eingesprochenen Ansagetext automatisch akustisch kontrollieren kann, ohne weitere Bedienungsschritte vorzunehmen. Hierdurch wird die Bedienbarkeit des erfindungsgemässen Fernsprechapparates mit intergralem Anrufbeantworter wesentlich vereinfacht.

Der erfindungsgemässe Fernsprechapparat mit intergral im Gehäuse enthaltenem Anrufbeantworter besitzt wahlweise einen zweiten Speicher, der zur Aufzeichnung eines von einem Anrufer empfangenen Gesprächs dient. Das Steuerprogramm der Steuerschaltung ist bei dieser Ausführungsform der Erfindung so ausgelegt, dass beim Empfang eines Anrufs zuerst der Meldetext-Bereich des ersten Speichers den Meldetext an die Sprechadern abgibt. Anschliessend wird der Aufnahmeeingang des zweiten Speichers, der bevorzugt ein Magnetspeicher ist, zur Aufnahme des Anrufergesprächs an die Sprechadern angekoppelt. Nach einer vorgegebenen Zeit wird der Absagetext-Bereich des ersten Speichers wieder an die Sprechadern angekoppelt, um den Absagetext dem Anrufer zu übermitteln und anschliessend die Amtsschleife zu trennen.

In einer zusätzlichen Einstellung lässt sich dann der Wiedergabe-Ausgang des zweiten Speichers mit dem Wiedergabekanal verbinden und das aufgenommene Gespräch akustisch wiedergeben.

Wie schon erwähnt, ist der zweite Speicher bevorzugt ein Magnetbandspeicher. Der erste Speicher ist bevorzugt ein flüchtiger Festkörperspeicher. Um sicherzustellen, dass der Inhalt des flüchtigen ersten Speichers auch nach einem Netzausfall wieder verfügbar ist, wird bevorzugt der Ansagetext beim Einsprechen in den ersten Speicher gleichzeitig in den Magnetbandspeicher eingespeichert. Die Steuerschaltung überträgt dann mittels eines speziellen Ausfallsteuerprogrammes den Ansagetext bei Wiedereinschalten der Netzspannung nach einem Netzausfall von dem Magnetbandspeicher in den ersten Speicher.

Anstelle einer Programmsteuerung lässt sich auch eine in Hardware aufgebaute Ausfallsteuerung vorsehen, die den Ansagetext bei seiner Aufnahme auch im Magnetspeicher speichert und nach einem Netzausfall in den ersten Speicher zurücküberträgt. Auf diese Weise ist sichergestellt, dass der Ansagetext nicht flüchtig im Fernsprechapparat gespeichert ist und nach einem Netzausfall nicht neu aufgenommen werden muss, sondern vom Magnetbandspeicher in den flüchtigen Festkörperspeicher übertragen werden kann.

Die Steuerschaltung enthält bevorzugt eine erste Steuereinheit zur Steuerung des Betriebsablaufs, wenn der Anrufbeantworter in den Betriebszustand «Anrufbereitschaft» gesetzt ist, und sie enthält eine zweite Steuereinheit, welche die Steuerung des Anrufbeantworters übernimmt, wenn sich der Anrufbeantworter im Betriebszustand «Aufnahme/Wiedergabe intern» befindet. Über eine Mode-Wähltaste lässt sich vom Benutzer des Fernsprechapparats der eine oder andere Betriebszustand einstellen. Anstelle zweier hardware-mässig aufgebauter Steuereinheiten zur Steuerung des Betriebsablaufs während der genannten Betriebszustände lässt sich die Steuerschaltung auch mit einem Mikroprozessor versehen,der mehrere Programmabschnitte enthält, die den Anrufbeantworter bei Wahl des Betriebszustands «Anrufbereitschaft» bzw. «Aufnahme/Wiedergabe intern» durch den Betriebszyklus hindurch steuern.

Mit dem Ausgang des dem ersten Speicher adressierenden Zählers ist bevorzugt ein zusätzlicher Prüfspeicher verbunden, der jeweils ein Speicherelement für jeden einzelnen Bereich des ersten Speichers enthält. Die Speicherelemente gehen jeweils dann von einem ungesetzten in den gesetzten Zustand über, nachdem der zugeordnete Speicherbereich bei einem Aufnahmevorgang vollständig durchadressiert wurde. Der Zustand der Speicherelemente ist somit ein Kennzeichen dafür, ob der vorausgegangene Aufnahmevorgang zu einer vollständigen Belegung des betreffenden Speicherbereichs führte oder nicht. Mittels einer Prüftaste lässt sich der Zustand aller Speicherelemente des Prüfspeichers optisch anzeigen. Der Benutzer erkennt dadurch auch ohne die zeit- und bedienungsaufwendige Wiedergabe der Ansagetext-Abschnitte, ob die Aufnahmevorgänge unbeabsichtigt zu früh abgebrochen worden sind. Nur wenn alle Speicherelemente gesetzt sind, besteht die Möglichkeit, dass die Ansagetext-Abschnitte korrekt aufgezeichnet wurden.

Der Zustand der Speicherelemente des Prüfspeichers wird bei Betätigung der Prüftaste bevorzugt optisch durch Zünden oder Nichtzünden ausgewählter Leuchtdioden der Anzeigevorrichtung angezeigt.

Zusätzlich werden bei der Wahl des Betriebszustands «Anrufbereitschaft» alle Bereiche des ersten Speichers durchadressiert, und der Inhalt der sequentiell adressierten Speicherplätze, d.h. das elektrische analoge Sprachsignal der einzelnen Ansagetext-Abschnitte, wird über einen Pegeldiskriminator geführt, der in Erfüllung postalischer Vorschriften bei Unterschreiten eines vorgegebenen Pegels und über ein vorgegebenes Zeitintervall hinweg einen Alarm anzeigt. Der betreffende Ansagetext-Abschnitt besitzt dann eine unzulässige lange Sprechpause, der betreffende Ansagetext-Abschnitt ist daher erneut und korrekt aufzuzeichnen.

Bei einer besonders bevorzugten Ausführungsform der Erfindung ist der Aufnahmekanal des Anrufbeantworters eingangsseitig mit der Sprechkapsel der Stationsschaltung, und der Wiedergabekanal eingangsseitig mit der Hörkapsel der Stationsschaltung verbunden. Diese Ausführungsform besitzt den Vorteil, dass alle Einrichtungen im Fernsprechapparat enthalten sind, die zum Betreiben des Anrufbeantworters erforderlich sind. Dadurch, dass zur Hörkontrolle oder hörbaren Wiedergabe des Ansagetextes der erste Speicher den Ansagetext über die Hörkapsel des Fernsprechapparates abgibt und über die Sprechkapsel des Fernsprechapparates aufnimmt, entfällt die Verwendung eines zusätzlichen Lautsprechers bzw. Mikrofons im Gehäuse des Fernsprechapparats bzw. als zusätzliche Beistellaggregate. Der Raumbedarf wird dadurch erheblich verringert, die Bedienbarkeit vereinfacht und die Übersichtlichkeit der Bedienungselemente erhöht.

Der Betriebszustand «Aufnahme/Wiedergabe intern» ist bevorzugt nur herstellbar, wenn die Mode-Wähltaste in den Betriebszustand «Aufnahme/Wiedergabe intern» geschaltet wird und gleichzeitig ein monostabiles Zeitglied über eine weitere Wähltaste gesetzt wird und zusätzlich während der gesetzten Zeit des monostabilen Zeitglieds der Handapparat vom Fernsprechapparat abgenommen wird. Durch diese Ansteuerung eines bestimmten Betriebszustands wird das unbeabsichtigte Einschalten insbesondere des Aufnahmezustandes sicher verhindert, so dass auch bei Falschbedienung ein Löschen der Ansagetext-Abschnitte mit hoher Wahrscheinlichkeit ausgeschlossen ist.

Zur Art der Betriebsart «Aufnahme» oder «Wiedergabe» ist bevorzugt ferner eine separate Wähltaste vorgesehen. Die Schaltungsorganisation lässt sich derart treffen, dass eine erste Betätigung dieser Wähltaste den Aufnahmezustand ankündigt, und erst eine weitere Betätigung dieser Wähltaste die zeitsynchrone Durchadressierung des zuvor gewählten Speicherbereichs des ersten Speichers auslöst.

Im folgenden wird ein Ausführungsbeispiel der Erfindung anhand der Zeichnung näher erläutert. Es zeigen:

Fig. 1 ein Blockschaltbild des erfindungsgemässen Fernsprechapparats;

Fig. 2 eine schematische Darstellung der verschiedenen Bereiche des ersten Speichers;

Fig. 3 ein Blockschaltbild der erfindungsgemässen Steuerschaltung; und

Fig. 4 ein Blockschaltbild der optischen Anzeigevorrichtung in Einzelheiten.

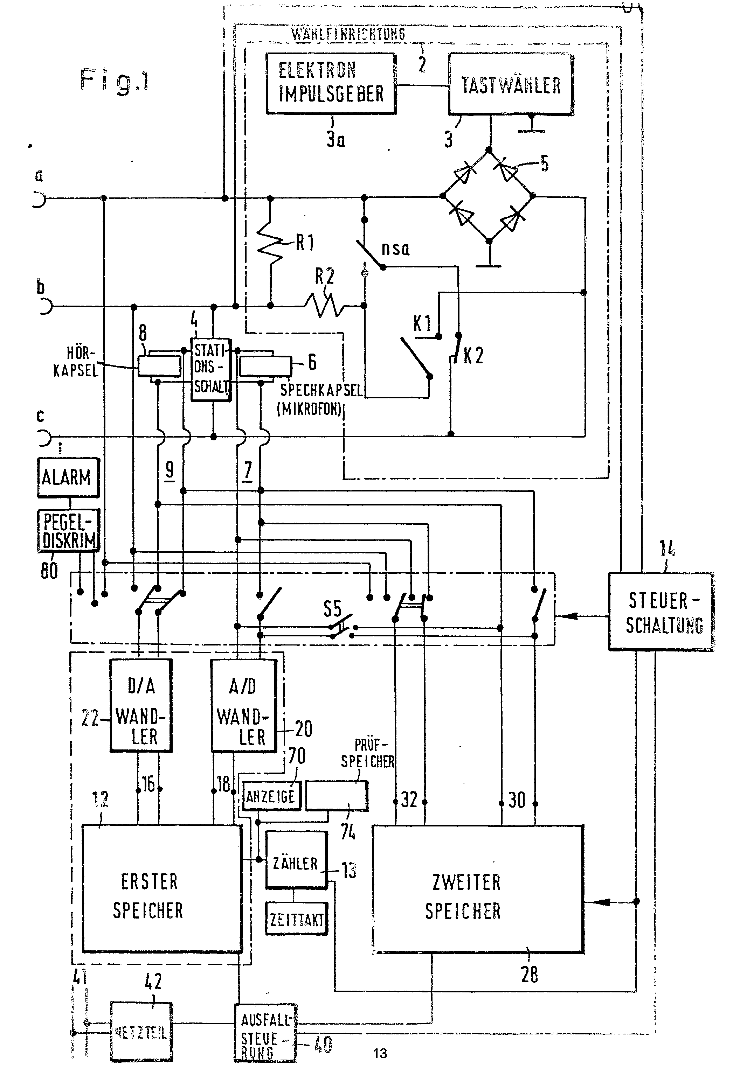

Fig. 1 zeigt schematisch den erfindungsgemässen Fernsprechapparat mit dem integral im Gehäuse enthaltenen Anrufbeantworter. Die bekannte Schaltung 2 bis 8 des Fernsprechapparats für den Fernsprechbetrieb enthält eine Wähleinrichtung 2, die z.B. einen Tastwähler 3 enthält, der von einem elektronischen Impulsgeber 3a angesteuert wird. Der Tastwähler wird über eine Gleichrichterbrücke 5 zwischen die Sprechadern a, b gelegt, wenn während des Wählbetriebs der Kontakt k1 geschlossen und der Kontakt k2 geöffnet wird. Zwischen den Sprechadern a und b liegt im Sprechzustand die Stationsschaltung 4 mit der Sprechkapsel 6 und der Hörkapsel 8, da im Sprechzustand der Kurzschlusspfad von der Sprechader a über den Kontakt nsa und k2 geschlossen ist und die über die Gleichrichterbrücke 5 laufende Verbindung zwischen den Sprechadern a, b durch Öffnen des Kontakts k1 unterbrochen ist. Vorgesehen sind ferner Widerstände R1 und R2 als Überspannungsschutz.

Eine Steuerschaltung 14 ist mit den Sprechadern a, b verbunden und schliesst bei Empfang eines Anrufes die Amtsschleife. Die Steuerschaltung 14 lässt sich vom Fernsprechteilnehmer durch Betätigung von leicht zugänglichen Bedienungselementen oder Wähltasten auf der Oberfläche des Fernsprechergehäuses in verschiedene Einstellungen setzen. In einer ersten Einstellung verbindet die Steuerschaltung 14 den Ausgang 16 eines ersten Speichers 12 mit den Sprechadern a, b und gibt nach Empfang eines Anrufes den im ersten Speicher 12 gespeicherten Ansagetext an die Sprechadern a, b ab. In einer vom Fernsprechteilnehmer wählbaren zweiten Einstellung verbindet die Steuerschaltung 14 den Eingang 18 des ersten Speichers 12 mit der Sprechkapsel 6 der Stationsschaltung 4 und setzt den ersten Speicher 12 in einen zur Aufnahme eines Textes bereiten Aufnahmebetrieb. In einer dritten Einstellung legt die Steuerschaltung 14 den Ausgang 16 des ersten Speichers zur Wiedergabe des Ansagetextes an die Hörkapsel 8 der Stationsschaltung 4. In einer ebenfalls vom Fernsprechteilnehmer einstellbaren Ruhestellung trennt die Steuerschaltung 14 den Ausgang 16 und den Eingang 18 des ersten Speichers 12 von der Fernsprechbetriebsschaltung 2-8. In dieser Ruhestellung steht die Fernsprechbetriebsschaltung ohne Einschränkungen für den Fernsprechbetrieb zur Verfügung und ermöglicht den einwandfreien Sprech- und Wählbetrieb sowie den automatischen Beantwortungsbetrieb, wenn der Teilnehmer zuvor die Betriebsart «Anrufbereitschaft» eingestellt hat.

Der erste Speicher 12 ist als Festkörperspeicher ausgebildet, vor dessen Eingang 18 ein Analog/Digitalwandler 20, und an dessen Ausgang ein Digital/Analogwandler 22 angeordnet ist. Der Analog/Digitalwandler enthält einen Delta-Modulator zur Umwandlung der analogen Sprachsignale in digitale Sprachsignale, die dann im ersten Speicher gespeichert werden können. Mit einem Delta-Modulationsverfahren, welches jeweils lediglich die Änderung eines herausgetasteten Amplitudenwerts gegenüber dem vorausgegangenen Amplitudenwert als Information verarbeitet, lässt sich die zur Erzeugung einer guten Sprachqualität erforderlichen Datenrate auf unter 12 000 Bits/Sek.

verringern. Zur Rückgewinnung der analogen Sprachsignale aus dem ersten Speicher 12 enthält der Digital/Analogwandler 22 einen Delta-Demodulator, der die digitalen Sprachsignale in analoge Sprachsignale zurückverwandelt.

Zur Aufzeichnung eines empfangenen Gesprächstextes, den der Anrufer dem angerufenen Teilnehmer mitteilen will, ist ein zweiter Speicher 28, ein Magnetbandspeicher, vorgesehen. Die Steuerschaltung 14 trennt dann in ihrer ersten Einstellung nach Abgabe eines ersten Abschnittes des Ansagetextes, des sog. Meldetextes, den ersten Speicher 12 von den Sprechadern a, b und schaltet den zweiten Speicher 28 anschliessend an die Sprechadern a, b an und setzt den zweiten Speicher 28 in einen Aufnahmezustand. Nach einer vorgegebenen Aufnahmezeit stellt die Steuerschaltung 14 wieder die erste Einschaltung her, koppelt also den ersten Speicher 12 wieder an die Sprechadern an, und dieser gibt einen weiteren Ansagetext-Abschnitt, den sog. Absagetext, an die Sprechadern ab. Anschliessend wird die Amtsschleife unterbrochen.

Die Steuerschaltung 14 legt den Ausgang 30 des zweiten Speichers 28 in einer vom Teilnehmer wählbaren vierten Einstellung an die Hörkapsel 8, die zusammen mit der Sprechkapsel 6 im Handapparat des Fernsprechapparates angeordnet ist. Die Steuerschaltung ermöglicht in dieser vierten Einstellung ferner die Wiedergabe des im Magnetbandspeicher eingespeicherten Sprechtextes über die Hörkapsel 8. In einer fünften Einstellung koppelt die Steuerschaltung 14 den Eingang 32 des Magnetbandspeichers 28 an die Sprechkapsel 6 an und setzt den Magnetbandspeicher 28 in einen Aufnahmezustand. In dieser fünften Einstellung lässt sich dann vom Fernsprechteilnehmer ein Text in den Magnetbandspeicher diktieren, das Gerät arbeitet dann in einem Diktierbetrieb. In der vierten Einstellung der Steuerschaltung 14, in der der Ausgang 30 des Magnetbandspeichers 28 an die Hörkapsel 8 angekoppelt ist, lässt sich der vom Teilnehmer über die Sprechkapsel 6 in den Speicher 28 diktierte Text wieder abhören.

Im Gehäuse des Fernsprechapparates ist bei der Ausführungsform des Anrufbeantworters ein von der Steuereinrichtung 14 steuerbares Laufwerk vorgesehen, welches aus dem Gehäuse des Fernsprechapparates herausragend Zapfen zur Aufnahme und zum Antrieb der Bandwickel des Magnetbands besitzt. Bevorzugt wird eine Minikassette bekannter Art verwendet, die Bandwickel zur Aufnahme des Magnetbands enthält und sich einsetzbar und herausnehmbar auf die Zapfen des Laufwerks aufsetzen lässt.

Die einwandfreie Funktion des Fernsprechbetriebs hat bei dem erfindungsgemässen Fernsprechapparat absoluten Vorrang. Die Abwicklung abgehender und ankommender Fernsprechverbindungen darf durch die zusätzlichen Speicher 12, 18 und die Steuerschaltung 14 nicht behindert werden. Zu diesem Zweck schaltet sich die Steuerschaltung 14 bei Empfang eines Anrufes selbsttätig aus der zweiten bis fünften Einstellung in die Ruhestellung zurück, wodurch die Fernsprechbetriebsschaltung 2 bis 8 von den Speichern 12, 28 entkoppelt ist. Durch eine akustische oder optische Meldung wird der Teilnehmer von der Ankunft eines Anrufes informiert, und der ankommende Anruf wird an die Stationsschaltung 4 geschaltet.

Der Anrufbeantworter wird von einem Netzteil 42 gespeist, das von dem Versorgungsnetz 41 eine Wechselspannung an seinem Eingang erhält.

Der erste Speicher 12 ist ein flüchtiger Festkörperspeicher und wird z.B. durch dynamische Festwertspeicher, RAMs, verwirklicht, deren Speicherinhalt - der digitale Ansagetext - periodisch aufgefrischt wird, um ständig verfügbar zu sein. Bei einem Netzausfall wird die periodische Auffrischung des ersten Speichers unterbrochen, und der Speicherinhalt geht daher verloren.

Erfindungsgemäss verbindet nun die Steuerschaltung 50 in der zweiten Einstellung, in der der erste Speicher 12 mit der Sprechkapsel 6 verbunden wird, gleichzeitig auch der Magnetbandspeicher 28 mit der Sprechkapsel 6 und setzt den ersten Speicher 12 und den Magnetbandspeicher 28 gleichzeitig in Aufnahmebetrieb, wobei zuvor das Magnetband des Magnetbandspeichers 28 in eine vorgegebene Position transportiert wurde. Der Ansagetext wird beim Einsprechen in den Ansagetextspeicher gleichzeitig auch in dem Magnetbandspeicher aufgezeichnet.

Vorgesehen ist eine Ausfallsteuerung 40, die dem Netzteil 42 nachgeschaltet ist und bei Wiedereinschalten der Netzspannung nach einem Netzausfall den Ansagetext vom Magnetspeicher 28 in den ersten Speicher 12 überträgt. Zu diesem Zweck ist eine direkte Verbindung zwischen dem Ausgang 30 des Magnetbandspeichers 28 und dem Eingang 18 des ersten Speichers 12 vorgesehen, die nach dem Wiedereinschalten der Netzspannung durch Schliessen des Schalters S5 geschlossen wird, sobald das Magnetband des Magnetbandspeichers 28 in die Stellung transportiert wurde, in der der Ansagetext vom Magnetband auslesbar ist.

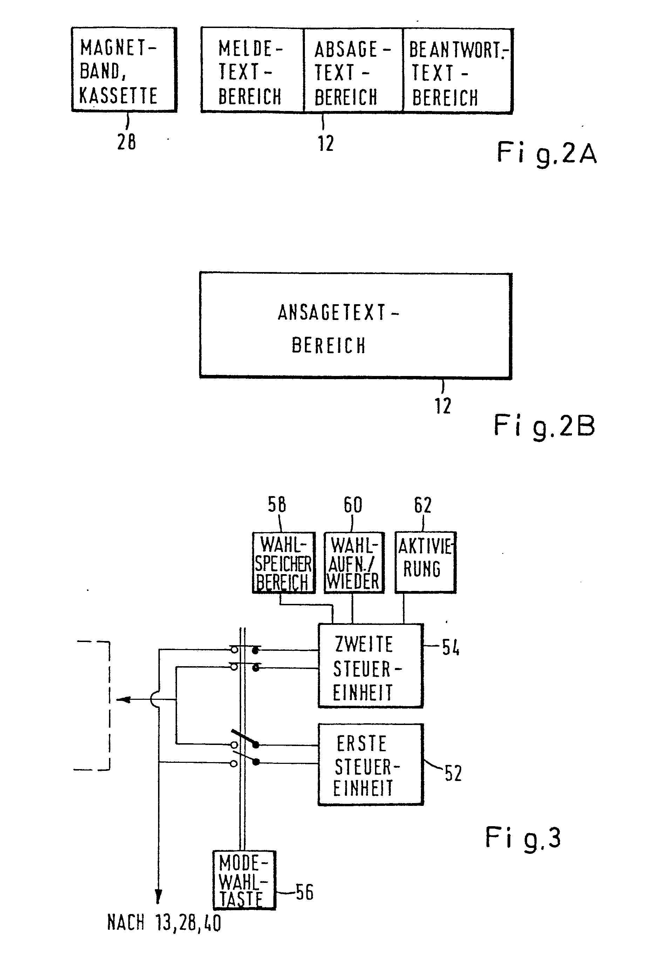

Wie insbesondere der Fig. 2 entnehmbar ist, die eine schematische Aufteilung der Speicherplätze zeigt, besitzt der erste Speicher mehrere Speicherbereiche, die einzeln zur Aufzeichnung und Wiedergabe von Ansagetext-Abschnitten über den Aufnahmekanal 6,7 und den Wiedergabekanal 8,9 direkt adressierbar sind. Die Adressierung der Speicherplätze der einzelnen Bereiche des ersten Speichers erfolgt seriell und zeitsynchron mittels eines mit konstantem Zeittakt gespeisten Zählers 13.

Wie Fig. 2 entnehmbar ist, die eine schematische Aufteilung der Speicherplätze in die Speicherbereiche zeigt, wird der erste Speicher 12 wahlweise entweder mit einem Meldetext-Bereich zur Speicherung des von der Post vorgeschriebenen Meldetextes, einem Absagetext-Bereich zur Speicherung eines von der Post vorgeschriebenen Absagetextes, und einem Beantwortungsbereich zur Speicherung eines Beantwortungstextes oder mit lediglich einem Ansagetext-Bereich betrieben. Ein Betrieb mit nur einem Ansagetext-Bereich erfolgt, wenn kein zweiter Speicher 28 vorgesehen ist und das Gerät als «Anrufbeantworter ohne Gesprächsaufzeichnung» arbeitet. Ist dagegen der zweite Speicher vorhanden und betriebsbereit, so wird der erste Speicher 12 mit einem Meldetext-Bereich, einen Absagetext-Bereich und einem Beantwortungstextbereich betrieben. Der Anrufbeantworter meldet sich bei einem empfangenen Anruf zuerst mit dem Meldetext, d.h. die Steuerschaltung 14 legt daher nach empfangenem Anruf den ersten Speicher 12 an die Sprechadern. Anschliessend wird der zweite Speicher 28 an die Sprechadern a, b gelegt und die Nachricht vom Anrufer aufgenommen. Schliesslich wird erneut der erste Speicher 12 an die Sprechadern a, b angekoppelt und der Absagetext an den Anrufer übertragen. Anschliessend wird die Amtsschleife geöffnet, das Gespräch ist beendet. Sollte sich bei einer Prüfung vor Empfang eines Anrufers herausstellen, dass der zweite Speicher 28 aufgrund irgendeiner Störung nicht betriebsbereit ist, wird anstelle des zweiten Speichers zwischen den Meldetext und den Absagetext der Beantwortungstext an die Sprechadern abgegeben. Dadurch, das der Zähler 13 den jeweils gewählten Speicherbereich des ersten Speichers 12 direkt adressiert und den Speicherinhalt ein- bzw. ausliest, wird die Bedienbarkeit entscheidend vereinfacht. Es entfällt das bei Magnetbandspeichern unumgängliche vorausgehende Aufsuchen des jeweiligen Beginns des betreffenden Speicherbereichs.

Die Steuerschaltung 14 ist derart programmiert, dass jedem Aufnahmevorgang über den Aufnahmekanal 6, 7 in irgendeinem gewählten Bereich des ersten Speichers 12 unmittelbar ein Wiedergabevorgang über den Wiedergabekanal 8, 9 folgt, um den zuvor eingesprochenen Ansagetext-Abschnitt akustisch auf seine Vollständigkeit und Deutlichkeit zu überprüfen. Auch bei diesem automatisch erfolgenden Vorgang ist aufgrund der direkten Adressierbarkeit der einzelnen Bereiche des Festkörperspeichers 12 kein lästiges vorausgehendes Rückspulen etc. erforderlich.

Im Gehäuse ist eine optische Anzeigevorrichtung 70 aus mehreren örtlichen hintereinander angeordneten diskreten Anzeigeelemente angebracht, die über eine Anzeigesteuerung 72 zeitsynchron mit der Adressierung der Speicherplätze des ersten Speichers ansteuerbar und zündbar sind. Die Anzahl der schon gezündeten Anzeigeelemente zu der Gesamtzahl an Anzeigeelementen verhält sich wie der jeweils durchadressierte Teil eines betreffenden Speicherbereichs zu dem Gesamtinhalt des betreffenden Speicherbereichs. Auf diese Weise wird die zeitliche Durchadressierung des zweiten Speichers 12 dem Benutzer optisch angezeigt. Bei der Aufnahme eines Ansagetext-Abschnitts kann daher der Benutzer anhand der optischen Anzeigevorrichtung 70 die Textlänge und die Sprechgeschwindigkeit der Gesamtkapazität des betreffenden Speicherbereichs bzw. dem noch unbesprochenen Teil des betreffenden Speicherbereichs anpassen.

Fig.3 zeigt die einzelnen Blöcke der Steuerschaltung 50. Die Steuerschaltung 14 enthält eine erste Steuereinheit 52 zur Steuerung des Betriebsablaufs während des Zustands «Anrufbereitschaft». Die Steuerschaltung 14 enthält ferner eine zweite Steuereinheit 54 zur Steuerung des Betriebsablaufs während des Betriebszustandes «Aufnahme/ Wiedergabe intern». Eine Mode-Wähltaste 56 erlaubt die Einstellung entweder des einen oder des anderen Betriebszustands und bewirkt in der Steuerschaltung 14, dass die Steuerung entweder an die erste oder die zweite Steuereinheit 52, 54 abgegeben wird.

Die erste Steuereinheit übernimmt die Steuerung des Betriebsablaufs, wenn die Mode-Wähltaste in die Stellung «Anrufbereitschaft» gesetzt ist. Zu Beginn des Programmablaufs der ersten Steuereinheit 52 werden automatisch alle Bereiche des ersten Speichers 12 durchadressiert, und deren Inhalt wird am Ausgang des ausgangsseitigen Analog/Digitalwandlers 23 als elektrisches Sprachsignal einem Pegeldiskriminator 80 zugeführt, der das elektrische Sprachsignal der Ansagetext-Abschnitte daraufhin überprüft, ob ein vorgegebener Mindestpegel nicht länger als ein vorgegebenes Zeitintervall unterschritten wird. Sofern keine entsprechend lange Unterscheidung des Mindestpegels wahrgenommen wird, prüft das Programm der ersten Steuereinheit 52 anschliessend die Aufnahmebereitschaft des zweiten Speichers 28. Zu diesem Zweck wird der aufwickelnde Bandwickel des zweiten Speichers 28 eine kurze Zeitlang angetrieben, und es wird dem Benutzer Anrufbereitschaft signalisiert, wenn unter der Zugkraft des Magnetbandes auch der abwickelnde Bandwickel rotiert, da dann a) ein Magnetband vorhanden ist d.h. eine Kassette in den zweiten Speicher 54 eingelegt ist, und b) das Magnetband keinen Riss besitzt. Anschliessend ist dann der Fernsprechapparat mit dem integralen Anrufbeantworter anrufbereit, und die erste Steuereinheit 52 führt bei Empfang eines Anrufes das An- und Abkoppeln des ersten und des zweiten Speichers 12, 28 an die Sprechadern a, b in der richtigen Reihenfolge aus.

Stellt dagegen der Pegeldiskriminator 80 fest, das die elektrischen Sprachsignale den Mindestpegel zu stark oder zu lange unterschreiten, bzw. wird ein Bandriss oder dgl. festgestellt, so wird ein Alarmsignal abgegeben.

Die zweite Steuereinheit 54 steuert den Betriebsablauf, wenn die Mode-Wähltaste 56 in die Stellung «Aufnahme/Wiedergabe intern» gesetzt ist. Die zweite Steuereinheit 54 lässt sich über Wähltasten 58, 60, 62 vom Benutzer bedienen, wodurch jeweils entsprechende Programmabschnitte des Steuerprogramms der zweiten Steuereinheit 54 ausgewählt und in den Betrieb gesetzt werden. Eine erste Wähltaste 58 dient zur Wahl des Speicherbereichs des ersten Speichers 12. Eine zweite Wähltaste 60 gestattet die Wahl des Betriebszustandes «Aufnahme» oder «Wiedergabe». Eine dritte Wähltaste 62 stellt eine Sicherheitstaste dar, die betätigt werden muss, um die zweite Steuereinheit 54 zu aktivieren. Mit der dritten Wähltaste 62 wird ein monostabiles Zeitglied gesetzt, und während der Setzzeit muss der Handapparat 6,8 vom Fernsprechapparat abgenommen werden, um die zweite Steuereinheit 54 zu aktivieren und den Betriebszustand «Aufnahme/Wiedergabe intern» funktionsfähig bereitzusetzen. Die dritte Wähltaste 52 stellt somit einen Schutz vor unbeabsichtigtem Eintritt in den Betriebszustand «Aufnahme/Wiedergabe intern» dar.

Der Fernsprechapparat besitzt darüber hinaus separate Wähltasten zur Steuerung des zweiten Speichers 28.

Gemäss Fig. 1 ist mit dem Ausgang des den ersten Speicher 12 adressierenden Zählers 13 ein Prüfspeicher 74 verbunden, der den einzelnen Bereichen des ersten Speichers 12 zugeordnete Speicherelemente enthält, die in den gesetzten Zustand übergehen, nachdem der zugeordnete Speicherbereich des ersten Speichers 12 bei einem Aufnahmevorgang vollständig durchadressiert wurde. Vorgesehen ist ferner eine Prüftaste 62, die bei Betätigung den Zustand der Speicherelemente des Prüfspeichers optisch anzeigt und dadurch dem Benutzer zu erkennen gibt, ob die Speicherbereiche des ersten Speichers 12 während des Aufnahmevorgangs alle einen vollständigen Zyklus durchlaufen haben, d.h. ob die entsprechenden Ansagetext-Abschnitte alle vorhanden sind. Der Zustand der Speicherelemente des Prüfspeichers 74 lässt sich zweckmässig - bei Betätigung der Prüftaste 62 - optisch durch Zünden oder Nichtzünden ausgewählter Leuchtdioden der Anzeigevorrichtung 70 anzeigen. Dadurch lassen sich separate Anzeigeelemente vermeiden, wodurch die Übersichtlichkeit der Wähl-und Steuertasten im Gehäuse erhöht wird.

Gemäss einer alternativen Ausführungsform der Erfindung wird zwischen den Ausgang des Analog/Digitalwandlers 20 und den Eingang 18 des ersten Speichers 12 eine Diskriminatorschaltung (nicht dargestellt) eingefügt, die das Vorhandensein bzw. Nichtvorhandensein eines Digitalen Sprachsignals erkennt. Wenn am Ausgang des A/D-Wandlers 20 kein digitales Sprachsignal vorliegt, setzt die Steuerschaltung 14 über die Diskriminatorschaltung (nicht dargestellt) den ersten Speicher 12 in einen Bereitschafts- oder Wartezustand (stand by), in dem keine Einspeicherung in den ersten Speicher 12 erfolgt. Wird dagegen von der Diskriminatorschaltung am Ausgang des A/D-Wandlers ein digitales Sprachsignal erkannt, so wird der erste Speicher 12 von der Steuerschaltung 14 in den aktiven Zustand gesetzt und seriell adressiert, und aufeinanderfolgende Datenwörter des ankommenden digitalen Sprachsignals werden nacheinander in die adressierten Speicherplätze eingespeichert. Bevorzugt ist unmittelbar vor dem Eingang des ersten Speichers 12 eine Verzögerungsschaltung (nicht dargestellt) eingefügt, die das digitale Sprachsignal mindestens um die Ansprechzeit bzw. Detektionszeit der Diskriminatorenschaltung verzögert. Dadurch wird erreicht, dass das digitale Sprachsignal den ersten Speicher 12 erst dann erreicht, wenn der erste Speicher 12 wieder aktiviert und zur Einspeicherung bereit ist. Auf diese Weise werden die Speicherplätze des ersten Speichers 12 nur bei Vorhandensein eines Sprachsignals, nicht jedoch bei Auftreten einer Sprechpause belegt. Dadurch wird eine optimale Ausnutzung der Speicherkapazität erreicht.

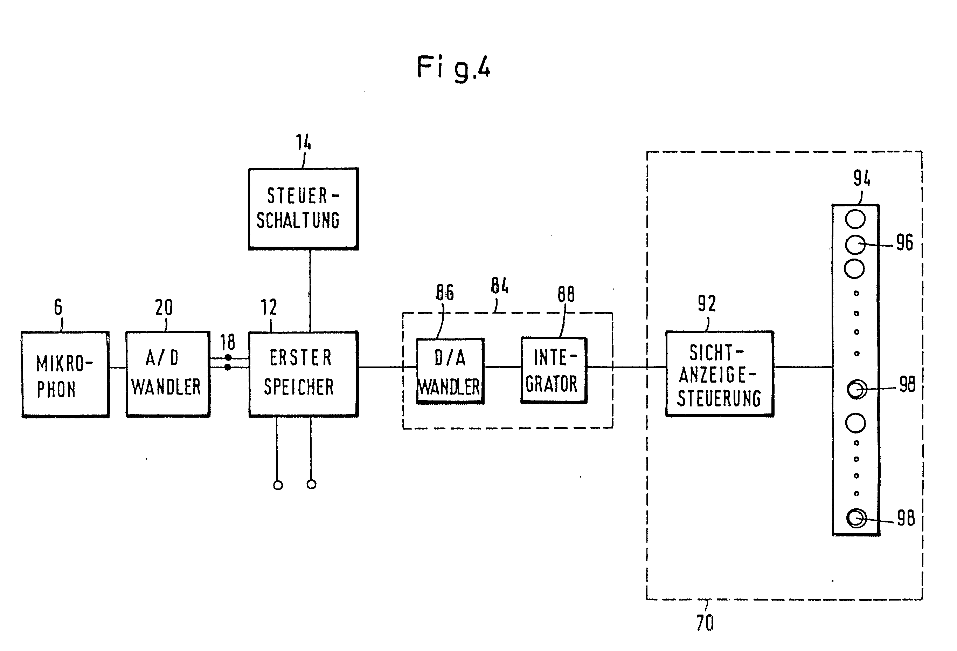

Fig. 4 zeigt ein Blockschaltbild der optischen Anzeigevorrichtung 70. Der erste Speicher 12 wird von der zentralen Steuerschaltung 14 derart gesteuert, dass der Ausgang des ersten Speichers 12 bei geeigneter Einstellung des Anrufbeantworters durch den Benutzer beim Ankommen eines Anrufs mit der Fernsprechleitung verbunden wird und dann den Ansagetext dem Anrufer übermittelt. Der Eingang des ersten Speichers 12 ist über den A/D-Wandler 20 mit dem Mikrofon 6 verbunden, wobei der A/D-Wandler 20 das vom Mikrofon 6 empfangene elektrische Sprachsignal zur Einspeicherung in den ersten Speicher in ein digitales Signal umwandelt.

Der erste Speicher 12 ist ferner mit einer Ansteuereinheit 84 verbunden, die eingangsseitig einen Digital/Analogwandler 86 enthält, an den sich ein Integrator 88 anschliesst. Der Digital/Analogwandler 86 erhält vom Zeittakt-Oszillator des als Festkörperspeicher ausgebildeten ersten Speichers 12 den Zeittakt zugeführt und wandelt diesen in ein Analogsignal um, welches der Integrator 88 in eine Treppenspannung umwandelt, die eventuell am Integratorausgang durch eine Glättungsschaltung geglättet wird und zeitlich proportional ansteigt. Die Treppenspannung wird der Anzeigevorrichtung 70 zugeführt, die an ihrem Eingang eine Sichtanzeigesteuerung 92 enthält, welche jeweils bei einer konstanten, vorgegebenen Zunahme der Treppenspannung ein zusätzliches weiteres Anzeigeelement 96 zündet, das den bisher schon gezündeten Anzeigeelementen 96 benachbart liegt. Die Zahl der gezündeten Anzeigeelemente 96 entspricht dann dem Belegungsgrad des ersten Speichers 12.

Die Anzeigeelemente 96 bestehen aus diskreten Leuchtdioden. Das Zeitintervall zwischen dem Zünden zweier benachbarter Leuchdioden 96 beträgt einen vorgegebenen Bruchteil, 1/n, einer Sekunde. Jede n-te Leuchtdiode 96 besitzt dann eine zusätzliche Markierung 98. Beim Zünden einer Leuchtdiode mit Zusatzmarkierung - die z.B. auch in einer erhöhten Leuchtkraft der Leuchtdiode bestehen kann - erkennt der Benutzer den Ablauf einer vollen Sekunde.

**Ansprüche**

1. Fernsprechapparate mit einem Gehäuse, das eine Wähleinrichtung (2) und eine Stationsschaltung (4) enthält, mit einem die Sprechkapsel (6) und die Hörkapsel (8) der Stationsschaltung (4) tragenden Handapparat, mit einem integral im Gehäuse angeordneten Anrufbeantworter, der einen ersten Speicher (12) zur Speicherung und Wiedergabe eines Ansagetextes an die Sprechadern des Teilnehmeranschlusses, und eine mit den Sprechadern verbundene Steuerschaltung (14) zur Wahl und Steuerung des Betriebszustandes, sowie einen Aufnahmekanal (18) und einen Wiedergabekanal (16) enthält, die an den ersten Speicher (12) zur Aufnahme und zur Wiedergabe eines Ansagetextes anschliessbar sind, dadurch gekennzeichnet, das der erste Speicher (12) als Festkörperspeicher ausgebildet ist, vor dessen Eingang (18) ein Analog/Digitalwandler (20) zur Umwandlung der analogen Sprachsignale in digitale Sprachsignale, und an dessen Ausgang (16) ein Digital/Analogwandler (22) zur Rückwandlung der gespeicherten digitalen Sprachsignale in analoge Sprachsignale vorgesehen ist, und dass eine optische Anzeigevorrichtung (70) aus mehreren örtlich in Reihe angeordneten Anzeigeelementen, (96, 98) deren Gesamtzahl proportional der möglichen Speicherkapazität ist, im Gehäuse sichtbar angeordnet ist, die bei der Aufnahme und/oder der Wiedergabe von Ansagetext-Abschnitten anspricht und den bei der Aufnahme und/oder Wiedergabe durchadressierten Teil des betreffenden Bereichs des ersten Speichers (12) anzeigt.

2. Fernsprechapparat nach Anspruch 1, dadurch gekennzeichnet, dass der erste Speicher (12) in mehrere Speicherbereiche unterteilt ist, die einzeln zur Aufzeichnung und Wiedergabe von Ansagetext-Abschnitten über den Aufnahmekanal (7) und den Wiedergabekanal (9) direkt adressierbar sind.

3. Fernsprechapparat nach Anspruch 1 oder 2, dadurch gekennzeichnet, das der erste Speicher (12) wahlweise mit einem Meldetext-Bereich, einem Absagetext-Bereich und einem Beantwortungstext-Bereich oder mit nur einem Ansagetext-Bereich betreibbar ist.

4. Fernsprechapparat nach einem der vorstehenden Ansprüche, dadurch gekennzeichnet, dass die Speicherplätze der einzelnen Bereiche des ersten Speichers (12) zur Aufnahme und Wiedergabe der Ansagetext-Abschnitte seriell und zeitsynchron von einem mit konstantem Zeittakt gespeisten Zähler (13) adressiert sind.

5. Fernsprechapparate nach einem der vorstehenden Ansprüche, dadurch gekennzeichnet, dass die Steuerschaltung (14) jedem Aufnahmevorgang über den Aufnahmekanal (7) in irgend einen gewählten Bereich des ersten Speichers (12) zur Kontrolle des eingesprochenen Ansagetext-Abschnitts unmittelbar einen Wiedergabevorgang über den Wiedergabekanal (9) nachfolgen lässt.

6. Fernsprechapparate nach einem der vorstehenden Ansprüche, dadurch gekennzeichnet, dass die in einer Reihe angeordneten Anzeigeelemente diskrete Leuchtdioden sind.

7. Fernsprechapparat nach einem der vorstehenden Ansprüche, dadurch gekennzeichnet-, dass ein zweiter Speicher (28) zur Aufzeichnung eines von einem Anrufer empfangenen Sprachtextes im Gehäuse des Fernsprechapparates angeordnet ist und von der Steuerschaltung kombiniert mit dem ersten Speicher (12) entsprechend dem gewünschten Betriebsablauf und -zustand steuerbar ist und über den Wiedergabekanal (9) abfragbar ist.

8. Fernsprechapparat nach Anspruch 7, dadurch gekennzeichnet, dass der zweite Speicher (28) ein Magnetbandspeicher ist, dass der erste Speicher (12) ein flüchtig speichernder Festkörperspeicher ist, dass der Ansagetext beim Einsprechen in den ersten Speicher (12) gleichzeitig in den Magnetbandspeicher (28) einspeicherbar ist, und dass eine Ausfallsteuerung (40) vorgesehen ist, die den Ansagetext bei Wiedereinschalten der Netzspannung nach einem Netzausfall von dem Magnetbandspeicher (28) in den ersten Speicher (12) überträgt.

9. Fernsprechapparat nach einem der vorstehenden Ansprüche, dadurch gekennzeichnet, das die Steuerschaltung (14) eine erste Steuereinheit (52) zur Steuerung des Betriebsablaufs im Betriebszustand «Anrufbereitschaft», und eine zweite Steuereinheit (54) zur Steuerung des Betriebsablaufs während des Betriebszustands «Aufnahme/Wiedergabe intern» enthält, und dass eine Mode-Wähltaste (56) wahlweise die Einstellung des Betriebszustands «Anrufbereitschaft» oder «Aufnahme/Wiedergabe intern» erlaubt und dabei die Steuerung an die erste oder zweite Steuereinheit übergibt.

10. Fernsprechapparat nach Anspruch 9, dadurch gekennzeichnet, dass die erste Steuereinheit (52) bei Wahl des Betriebszustands «Anrufbereitschaft» alle Bereiche des ersten Speichers (12) durchadressiert und sequentiell deren Inhalt an den Eingang eines Pegeldiskriminators (80) führt, der bei Unterschreitung eines vorgegebenen Pegels über ein vorgegebenes Zeitintervall einen Alarm anzeigt.

11. Fernsprechapparat nach Anspruch 10, dadurch gekennzeichnet, dass unmittelbar nach Durchlaufen des Inhaltes der Bereiche des ersten Speichers (12) durch den Pegeldiskriminator (80) die Aufnahmebereitschaft des zweiten Speichers (28) geprüft wird.

12. Fernsprechapparat nach einem der vorstehenden Ansprüche, dadurch gekennzeichnet-, dass ein Prüfspeicher (74) mit dem Ausgang des den ersten Speicher (12) adressierenden Zählers (13) verbunden ist und den einzelnen Bereichen des ersten Speichers (12) zugeordnete Speicherelemente enthält, die in den gesetzten Zustand übergehen, nachdem der zugeordnete Speicherbereich des ersten Speichers (12) bei einem Aufnahmevorgang vollständig durchadressiert worden ist, und dass eine Prüftaste (62) vorgesehen ist, die bei Betätigung den Zustand der Speicherelemente des Prüfspeichers (74) optisch anzeigt.

13. Fernsprechapparat nach Anspruch 12, dadurch gekennzeichnet, dass der Zustand der Speicherelemente des Prüfspeichers (74) bei Betätigung der Prüftaste (62) optisch durch Zünden oder Nichtzünden ausgewählte Leuchtdioden der Anzeigevorrichtung (70) anzeigbar ist.

## Claims

1. Telephone appartaus, with a casing which contains a dialling device (2) and a station circuit (4), with a handset carrying the microphone capsule (6) and the ear phone (8) of the station circuit (4), with a callanswering means which is arranged integrally in the casing and which contains a first store (12) for storing and reproducing an announced text on the speech wires of the subscriber connection, and a control circuit (14) connected to the speech wires and for selecting and controlling the operational state, and also a receiver channel (18) and a reproducing channel (16), which can be connected to the first store (12) for receiving and reproducing an announced text, wherein the first store (12) is constructed as a solid-state store, before the input (18) of which is provided an analogdigital converter (20) for converting the analog speech signals into digital speech signals, and at the output (16) of which is provided a digital/analog converter (22) for reconversion of the stored digital speech signals into analog speech signals, and wherein an optical indicating means (70) of a plurality of indicating elements (96, 98) which are locally arranged in series and of which the total number is proportional to the possible store capacity is visibly arranged in the casing, the said means responding with the reception and/or the reproduction of sections of announced text and indicates that region of the first store (12) which is pased through at the time of reception and/or reproduction.

2. Telephone apparatus according to Claim 1, wherein the first store (12) is split up into several storage regions, which are capable of being directly addressed individually for recording and reproducing announced text sections by way of the receiving channel (7) and the reproduction channel (9).

3. Telephone apparatus according to Claim 1 or 2, wherein the first store (12) can be operated at will with a calling text region, a cancelling text region and an answering text region or with only an announcing text region.

4. Telephone apparatus according to any one of the preceding Claims, wherein the storage positions of the individual regions of the first store (12) are addressed for receiving and reproducing the announced text sections serially and with time synchronisation by a counter (13) fed with a constant timing cycle.

5. Telephone apparatus according to any one of the preceding Claims, wherein the control circuit (14) allows each receiving operation through the receiving channel (7) in any selected region of the first store (12) to be followed directly by a reproducing process through the reproduction channel (9) for controlling the spoken text section.

6. Telephone apparatus according to any one of the preceding Claims, wherein the indicating elements arranged in a row are discrete luminous diodes.

7. Telephone apparatus according to any one of the preceding Claims, wherein a second store (28) for recording a spoken text received from a caller is arranged in the casing of the telephone apparatus and is controllable by the control circuit, combined with the first store (12), according to the required operational time and condition and can be interrogated or scanned through the reproduction channel (9).

8. Telephone appartus according to Claim 7, wherein the second store (28) is a magnetic tape store, wherein the first store (12) is a transiently storing solid-state store, wherein the announced text, on being spoken into the first store (12) can be simultaneously stored in the magnetic tape store, and wherein a failure control (40) is provided, which transfers the text from the magnetic tape store (28) into the first store (12) with the reconnection of the mains voltage after a mains failure.

9. Telephone apparatus according to any one of the preceding Claims, wherein the control circuit (14) controls a first control unit (52) for controlling the operational period in the operating state of «call readiness» and a second control unit (54) for controlling the operating time during the operational state «reception/reproduction internally», and wherein a mode selector key (56) allows the setting at will of the operating state «call readiness» or «reception/reproduction internally» and thereby transfers the control to the first or second control unit.

10. Telephone apparatus according to Claim 9, wherein the first control unit (52), when the operating state «call readiness» is chosen, addresses all regions of the first store (12) and sequentially conducts the content thereof to the input of a level discriminator (80) which, when a prescribed level is not reached, indicates a warning over a prescribed time interval.

11. Telephone apparatus according to claim 10, wherein the readiness for reception of the second store (28) is checked immediately after passage of the content of the regions of the first store (12) throug the level discriminator (80).

12. Telephone apparatus according to any one of the preceding claims, wherein a checking store (74) is connected to the output of the counter (13) addressing the first store (12) and contains store elements associated with the individual regions of the first store (12), which elements pass into the set condition after the associated store region of the first store (12) has been fully addressed with a reception operation, and wherein a checking key (62) is provided which, on being actuated, optically indicates the state of the store elements of the checking store (74).

13. Telephone apparatus according to claim 12, wherein the state of store elements of the checking store (74) can be indicated optically with actuation of the checking key (62) by illumination or non-illumination of selected luminous diodes of the indicating means (70).

**Revendications**

1) Appareil téléphonique comportant un boîtier avec une installation de sélection (2) et un circuit de poste (4), avec un combiné portant la capsule de micro (6) et la capsule d'écouteur (8) du circuit de poste (4), et un répondeur d'appel logé de façon intégrale dans le boîtier, qui comporte une première mémoire (12) pour enregistrer et restituer un texte d'annonce dans les lignes de communication du raccodement de l'abonné, ainsi qu'un circuit de commande (14) relié aux lignes de communication pour le choix et la commande de l'état de fonctionnement ainsi qu'un canal de réception (18) et un canal de lecture (16), qui sont susceptibles d'être reliés à la première mémoire (12) pour recevoir et restituer un texte d'annonce, caractérisé en ce que:
- la première mémoire (12) est réalisée en forme de mémoire fixe dont l'entrée (18) comporte un convertisseur analogique/numérique (20) pour convertir les signaux de conversation analogiques en des signaux de conversation numériques et dont la sortie (16) comporte un convertisseur numérique/analogique (22) pour transformer en retour les signaux numériques enregistrés pour les signaux de conversation en des signaux de conversation analogiques, et
- en ce qu'un dispositif d'affichage optique (70) formé de plusieurs éléments d'affichage (96, 98) disposés localement en série et dont le nombre total est proportionnel à la capacité d'enregistrements possibles, est prévu de façon apparente dans le boîter, et qui est mis en oeuvre à l'enregistrement et/ou à la lecture de segments du texte d'annonce et affiche la partie de la première mémoire (12) qui est adressée lors de l'enregistrement et/ou de la lecture.

2) Appareil de téléphone selon la revendication 1, caractérisé en ce que la première mémoire (12) est subdivisée en plusieurs zones de mémoire qui sont adressées directement pour l'enregistrement et la lecture de segments de texte d'annonce par le canal d'enregistrement (7) et le canal de lecture (9).

3) Appareil de téléphone selon les revendications 1 ou 2, caractérisé en ce que la première mémoire (12) peut fonctionner sélectivement avec une zone de texte de signalisation, une zone d'indication de fin de texte et une zone de texte le réponse ou seulement avec une zone de texte d'annonce.

4) Appareil téléphonique selon l'une des revendications précédentes, caractérisé en ce que les emplacements de mémoire des différentes zones de la première mémoire (12) sont adressés en série et de façon synchrone par un compteur (13) alimenté par une cadence constante pour l'enregistrement et la lecture des segments de texte d'annonce.

5) Appareil téléphonique selon l'une des revendications précédentes, caractérisé en ce que le circuit de commande (14) fait suivre chaque opération d'enregistrement par le canal d'enregistrement (7) dans n'importe quelle zone choisie de la première mémoire (12) et l'opération de lecture par le canal de lecture (9), directement pour contrôler le segment de texte d'annonce introduit.

6) Appareil de téléphone selon l'une des revendications précédentes caractérisé en ce que les éléments d'affichage prévus dans une ligne sont des diodes électroluminescentes, distinctes.

7) Appareil de téléphone selon l'une des revendications précédentes, caractérisé par une seconde mémoire (28) pour l'enregistrement d'un texte de conversation reçu par une personne qui appelle, dans le boîter de l'appareil téléphonique et peut être commandée de façon combinée par le circuit de commande avec la première mémoire (12) suivant le fonctionnement souhaité et l'état souhaité, et peut être interrogée par l'intermédiaire du canal de lecture 9.

8) Appareil de téléphone selon la revendication 7, caractérisé en ce que la seconde mémoire (28) est une mémoire à bande magnétique, en ce que la première mémoire (12) est une mémoire fixe à mémorisation fugitive, en ce que le texte d'annonce lors de l'introduction dans la première mémoire (12) est en même temps introduit dans la mémoire à bande magnétique (28) et en ce qu'il est prévu une commande de défaillance (40) qui transmet le texte d'annonce lors du rétablissement de la tension du réseau après une coupure de tension du réseau de la mémoire à bande magnétique (28) dans la première mémoire (12).

9) Appareil de téléphone selon l'une des revendications précédentes, caractérisé en ce que le circuit de commande (14) comporte une première unité de commande (52) pour commander le fonctionnement à l'état de fonctionnement «prêt pour l'appel» et une seconde unité de commande (54) pour commander le fonctionnement au cours de l'état de fonctionnement «enregistrement/lecture interne» et en ce qu'une touche de sélection de mode (56) permet au choix le réglage de l'état de fonctionnement «prêt pour l'appel» ou «enregistrement/lecture interne» et transfère ainsi la commande à la première ou la seconde unité de commande.

10) Appareil de téléphone selon la revendication 9, caractérisé en ce que la première unité de commande (52) lors du choix de l'état de fonctionnement «prêt pour l'appel» effectue l'adressage de toutes les zones de la première mémoire (12) et transmet séquentiellement leur contenu à l'entrée d'un discriminateur de niveau (80) qui lors du dépassement d'un niveau prédéterminé indique une alarme sur un intervalle de temps prédéterminé.

11) Appareil de téléphone selon la revendication 10, caractérisé en ce que directement après le passage du contenue des zones de la première mémoire (12) dans le discriminateur de niveau (80), la seconde mémoire (28) est vérifiée quant à son état «prêt pour la réception».

12) Appareil de téléphone selon l'une des revendications précédentes, caractérisé en ce qu'une mémoire d'essai (74) est reliée à la sortie du compteur (13) adressant la première mémoire (12) et contient les éléments de mémoire associés aux différentes zones de la première mémoire (12) et qui passant à l'état, après que la zone de mémoire associée de la première mémoire (12) ait été complétement adressée lors de l'opération d'enregistrement, et en ce qu'il est prévu une touche d'essai (62) qui, lors de la commande, affiche de façon optique l'état des éléments de mémoire de la mémoire d'essai (74).

13) Appareil de téléphone selon la revendication 12, caractérisé en ce que l'état des éléments de mémoire de la mémoire d'essai (74) est susceptible d'être affiché optiquement par l'allumage ou non des diodes électroluminescentes choisies du dispositif d'affichage (70) lors de la commande de la touche d'essai (62).

Fig. 1

0012864

0012864

Fig.2A

Fig.2B

Fig.3

NACH 13,28,40

15

0012864

Fig.4

17